# EUROPEAN PATENT APPLICATION

(11) **EP 1 542 232 A1**
(43) Date of publication of application: **15.06.2005**
(21) Application number: 04257520.9
(22) Date of filing: 03.12.2004
(51) Int. Cl.: G11B 27/034, G11B 27/10, G11B 27/32

(54) **Information recording and reproducing apparatus and information recording method**

(30) Priority: 09.12.2003 JP 2003409961
(71) Applicant: SONY CORPORATION, Tokyo (JP)
(72) Inventor: Takahashi, Kazuyuki, Shinagawa-ku, Tokyo (JP); Kasai, Hirofumi, Shinagawa-ku, Tokyo (JP); Bin Fakhruddin, Muzaffer Husain, Brooklands, Weybridge, Surrey KT13 0XW (GB); Yanagimoto, Takafumi, Shinagawa-ku, Tokyo (JP)
(74) Representative: Leppard, Andrew John

(57) **Abstract**

This invention provides an information recording and reproducing apparatus which is capable of recording audio data received, in a searchable state with respect to each music, with simple processing, in a recording medium in real time. The information recording and reproducing apparatus of the invention receives a data stream including, together with an audio stream, additional information of music which is now being transmitted by that audio stream. In the additional information, recorded is time information such as musical performance time of music and elapsed time. The information recording and reproducing apparatus records the received audio stream, sequentially in HDD, without change, and on the basis of the received additional information, reception ending time of music which is now being received in the audio stream, is calculated, and at such a time point that it became the calculated reception ending time, recording position information, which shows a recording position in HDD, of data of music which is now being received, is recorded in HDD, in association with additional information of the relevant music as a head position of music which will be received next.

## Description

### BACKGROUND OF THE INVENTION

### 1. Field of the Invention

This invention relates to an information recording and reproducing apparatus which receives a data stream including data of contents, and additional information of a program which includes time information with respect to each program in the data of contents which is now being transmitted, and records it in a recording medium, and reproduces the recorded contents, and an information recording method to a recording medium.

### 2. Description of the Related Art

In recent years, digital broadcasting by use of a communication satellite etc. has become popular. In the digital broadcasting, high quality signal transmission is possible, and in addition, multi-channel is realized by improvement of frequency utilization efficiency, and various contents such as movie, sport, news, and music are multiplexed to go on the air.

As one of the suchlike contents, an all music radio program using digital audio data goes on the air. For example, there is such a broadcast channel that music audio data, which was compressed by use of an audio compression system such as MPEG (Moving Picture Experts Group), goes on the air continuously. In addition, also rendered is such a service that data, in which various additional information as to music being distributed was written, is distributed in parallel with the suchlike audio data, and thereby, auser, who is listening to music, can visually recognize additional information as to the music, and can also record it in a recording medium together with audio data of the music. As the additional information, for example, a name of music and a name of an artist such as a musical performer are distributed.

On one hand, in recent years, high capacity recording apparatuses which use writing type DVD (Digital Versatile Disk) and HDD (Hard Disk Drive) etc. have become marketed at low price, and it becomes possible to record a number of audio data of music which was distributed in the all music radio program as described above, and so on, in the suchlike recording apparatus. For example, in case of music distributed, which was compressed and encoded by MPEG-AUDIO-Layer 2 system, it becomes possible to record audio data with a level of approximately 700 hours, to HDD with 80Gbytes.

In case of recording audio data of music distributed, in a recording apparatus, recording is normally carried out by a music unit, and therefore, in the recording apparatus, it is desired to judge a boundary of music which is distributed continuously, and to automatically record audio signals received, with respect to each music. To the suchlike desire, carried out in the past was to easily realize automatic recording with respect to each music, by automatically detecting a silent period between music, on the basis of a level of audio data which was inputted. Further, there was also sucha data transfer system that, in a receiving apparatus which receives broadcast contents in music distribution etc., a start point of music is judged from additional information which was transmitted in parallel with audio data as described above, and an audio signal, which is outputted from a receiving apparatus to a recording apparatus, is made to be silent just for a predeterminedtimeportionpriortothestartpoint, and thereby, it enabled to surely judge a boundary of music in the recording apparatus (e.g., see, Patent Document 1 which will be described below).

In addition, since it is possible to record audio data of a number of music in the high capacity recording apparatus, a technique for easily searching the recorded audio data has been sought. As an example like this, there was a recording apparatus which was configured in such a manner that, on the occasion of recording audio data to a portable optical disk medium such as DVD, in audio frame information in an audio packet in which a head of the audio frame is included, a fast access unit pointer, which shows a recording position of that head, has been recorded, and at the time of reproduction, it is possible to easily search the start position of the audio frame, by use of the fast access unit pointer as a clue (e.g., see, Patent Document 2 which will be described below).

[Patent Document 1] JP-A-2000-36184 publication (paragraph numbers [0091]-[0099], Fig.9)(No foreign counterparts: only JP)

[Patent Document 2] JP-A-9-251762 publication (paragraph numbers [0086]-[0091] (US5805537, EP79203B1)

As described above, it is desired to record audio data of arbitrary music in a recording apparatus in real time, at the same time as receiving an all music broadcast channel to listen to and view music, and further to easily search, and reproduce audio data which was recorded in the recording apparatus in a music unit. However, in a method of detecting a silent period on the basis of a level of audio data which is inputted, on the occasion of recording audio data, to judge a boundary of music, there is such a problem that it is not possible to surely detect the boundary in case that a silent period between music to be distributed is short, and inversely, in case that the silent period was lengthened and distributed, the number of music which can be distributed becomes small.

On this account, it is desired to describe performance time of music and elapsed time etc. to additional information which is distributed in parallel with audio data, and to surely detect a headpart of music byuse of these information. However, in order to realize the suchlike automatic detection in a conventional system, there was such a problem that processing such as exchange of signals between a receiving apparatus which receives broadcasting and a recording apparatus, and generation of information to be recorded becomes complex. In particular, in recent years, recording apparatuses of video/audio data by use of HDD have increased, and it is desired to record audio and video data which was received through broadcasting, in HDD in real time with simple processing, and to easily search data which was recorded.

Meanwhile, in the recording apparatus which was disclosed in the patent document 2, after an input of an audio signal was received, that audio signal and control information are once stored in HDD, and thereafter, information, which was read out from HDD, is multiplexed and recorded on a recording medium, and it is difficult to receive an input of an audio signal and record information which shows a head part of that audio signal and music etc. in real time.

### SUMMARY OF THE INVENTION

Embodiments of the invention seek to provide an information recording and reproducing apparatus which is capable of recording audio data, which was received as a data stream, in a recording medium in real time with simple processing in a searchable state with respect to each music.

Embodiments of the invention seek to provide an information recording method which is capable to recording audio data, which was received as a data stream, in a recording medium in real time with simple processing in a searchable state with respect to each music.

One aspect of the invention provides an information recording andreproducingapparatuswhich receives a data stream including data of contents, and additional information of a program, which includes time information with respect to each program in the data of contents which is now being transmitted, and records it in the recording medium, and reproduces the recorded contents, a time calculation unit adapted to calculate reception ending time of the program which is currently received in the data of contents, on the basis of the additional information received, and a recording control unit adapted to have the data of contents received recorded sequentially in the recording medium, and to have recording position information which shows a recording position in the recording medium of the data of contents which is now being received, recorded in the recording medium, at such a time point that it became the reception ending time which was calculated by the time calculation unit, in association with the additional information of the program as a head position of the program which will be received next.

In the suchlike information recording and reproducing apparatus, additional information, which includes time information with respect to each program in contents, is received together with data of contents, and reception ending time of a program, which is now being received in data of contents, is calculated by the time calculation unit, on the basis of the received additional information. By this means, reception time of a head of a program which will be received next is calculated. In addition, by control of the recording control unit, data of contents received is recorded sequentially in the recording medium. With this, the recording control unit has recording position information, which shows a recording position of data of contents which is now being received, in the recording medium, recorded in the recording medium, at such a time point that it became the reception ending time which was calculated by the time calculation unit, in association with the additional information of the program which will be received next. By this means, it becomes possible to recognize a recording position of a head of a corresponding program in the recording medium, by reading out the recording position information which was associated with the additional information which was recorded in the recording medium.

Another aspect of the invention provides an information recording method for receiving a data stream including data of contents, and additional information of a program which includes time information with respect to each program in the data of contents which is now being transmitted, and recording it in a recording medium a time calculation unit calculates reception ending time of the programwhich is nowbeing received in the data of contents, on the basis of the additional information which was received by a receiving unit, and a recording control unit records data of the contents which was received by the receiving unit, sequentially in the recording medium, and records in the recording medium recording position information which shows a recording position in the recording medium, of the data of contents which is now being received, at such a time point that it became the reception ending time which was calculated by the time calculation unit, in association with the additional information of the program as a head position of the program which will be received next.

In the suchlike information recording method, during such a period that additional information, which includes time information with respect to each program in contents, is received together with data of contents by the receiving unit, reception ending time of a program, which is now being received, in data of contents, is calculated by the time calculation unit, on the basis of the received additional information. By this means, reception time of a head of a program, which will be received next, is calculated. In addition, by control of the recording control unit, data of contents received is recorded sequentially in the recording medium, and at such a time point that it became the reception ending time which was calculated by the time calculation unit, the recording position information, which shows a recording position in the recording medium, of data of contents which is now being received, is recorded in the recording medium, in association with the additional information of the program which will be received next. By thismeans, itbecomespossibletorecognizearecordingposition of a head of a corresponding program in the recording medium, by reading out the recording position information which was associated with the additional information which was recorded in the recording medium.

According to an information recording and reproducing apparatus of embodiments, data of contents received is recorded sequentially in a recording medium, and recording position information, which shows a recording position in the recording medium, of a head of a program in contents, is recorded in the recording medium, in association with additional information of a program. Therefore, while it is possible to record data of contents received and additional information in real time with simple processing, it becomes possible to easily search, and read out data of contents recorded, in a program unit.

In addition, according to an information recording method of embodiments, data of contents received is recorded sequentially in a recording medium, and recording position information, which points out a recording position in a recording medium, of a head of a program in contents, is recorded in the recording medium, in association with additional information of a program. Therefore, while it is possible to record data of contents received and additional information in real time with simple processing, it becomes possible to easily search, and read out data of contents recorded, in a program unit.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig.1 is a view which shows a system configuration example of a satellite digital broadcasting system which relates to an embodiment of the invention;
Fig.2 is a block diagram which shows an internal configuration example of a broadcasting receiving apparatus which relates to the embodiment of the invention;
Fig.3 is a view which schematically shows a configuration of a data stream which is transmitted in a music channel;
Fig.4 is a flow chart which shows a flow of processing on the occasion of recording data of the music channel in the broadcasting receiving apparatus;
Fig.5 is a view which shows a screen display example of a music list of music which was recorded in HDD;
Fig.6 is a flow chart which shows a flow of basic processing for reproducing music which was recorded in HDD; and
Fig.7 is a view which shows a screen display example for automatic reproduction of music recorded.

### DETAILED DESCRIPTION OF THE PREFERRED EMBODIMENTS

Hereinafter, assuming that the invention was applied to satellite digital broadcasting by use of a communication satellite, embodiments of the invention will be described in detail with reference to the drawings. In this satellite broadcasting, it is configured to be able to receive a broadcast channel in which an all music radio program goes on the air (hereinafter, referred to as music channel), in addition to a TV channel in which a normal television program, which is composed of moving images and audio, goes on the air.

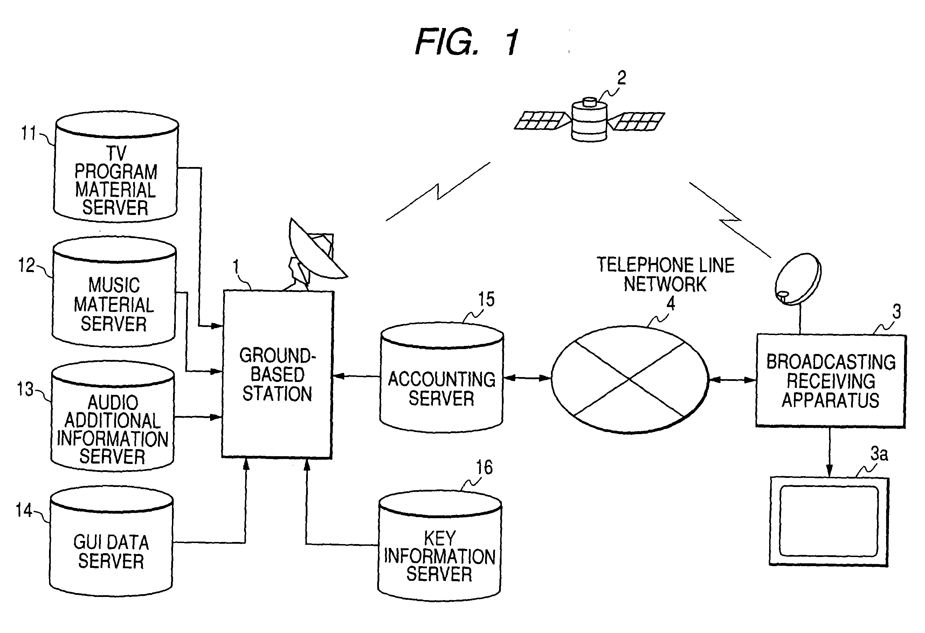

Fig. 1 is a view which shows a system configuration example of a satellite digital broadcasting system which relates to an embodiment of the invention.

The satellite digital broadcasting system shown in Fig. 1 has a ground-based station 1 which transmits satellite digital broadcasting, a communication satellite 2 which relays airwaves which were transmitted from the ground-based station 1, and a broadcasting receiving apparatus 3 which receives the airwaves which were relayed by the communication satellite 2. In addition, the ground-based station 1 and the broadcasting receiving apparatus 3 are connected by a telephone line network 4.

The ground-based station 1 has a TV program material server 11, a music material server 12, and an audio additional information server 13, as a server which provides materials of broadcasting contents, and also has a GUI (Graphical User Interface) data server 14 which provides GUI data for hearing and viewing contents which were provided, in the broadcasting receiving apparatus 3. Further, it has an accounting server 15 and a key information server 16, as an authentication server on the occasion of receiving contents in the broadcasting receiving apparatus 3.

The TV program material server 11 is a server which provides materials for TV channels such as movies and sport live coverage to the ground-based station 1, and moving image data and audio data are stored therein, and those data is transmitted sequentially to the ground-based station 1 in accordance with a broadcast program.

The music material server 12 is a server which provides audio data, which is distributed in a music channel, to the ground-based station 1, and audio data of music is stored therein, and those audio data is transmitted sequentially to the ground-based station 1, in accordance with a broadcast program.

The audio additional information server 13 is a server which provides various additional information as to music which is distributed through a music channel. The audio additional information server 13 transmits additional information of music which is being transmitted to the ground-based station 1, to the ground-based station 1, in conjunction with an operation of the music material server 12. In this additional information, included are titles of music, names of artists, musical performance time, elapsed time and so on, as it will be described later.

The GUI data server 14 is a server which provides GUI data for forming screens of a list page of music which is distributed through a music channel and an information page of each music, jacket images of music, a screen for use in EPG (Electric Program Guide) and so on. The GUI data server 14 transmits the above-described various GUI data which corresponds to music which has been transmitted to the ground-based station 1, to the ground-based station 1, in conjunction with operations of the music material server 12 and the audio additional information server 13.

The accounting server 15 is a server which carries out accounting processing to audiences who receive broadcasting to listen and view the same. The accounting server 15 keeps up contract information regarding program listening and viewing of each audience, and carries out accounting as to PPV (Pay Per View) programs, in accordance with program listening and viewing history information which is transmitted from the broadcasting receiving apparatus 3, and charges it to audiences.

The key information server 16 is a server which provides key information on the occasion of applying scramble processing to data of broadcasting contents, to the ground-based station 1.

The ground-based station 1 multiplexes moving images/audio data from the TV program material server 11, audio data from the music material server 12, additional information from the audio additional information server 13, GUI data from the GUI data server 14, and so on, together with ECD (Entitlement Control Message) which shows listening and viewing conditions of each program and EMM (Entitlement Management Message) which shows contract information of audiences, to generate a transport stream. At this time, the moving image/audio data from the TV program material server 11, and the audio data from the music material server 12 are compressed and encoded by a MPEG system. In addition, scramble processing is applied to data of program contents which is transmitted by a limited reception system, by use of the key information from the key information server 16.

Meanwhile, in a music channel using the audio data from the music material server 12, music is distributed continuously, and additional information regarding music which is now in distribution is distributed. The additional information from the audio additional information server 13 is multiplexed as a data stream which is separated from an audio stream for transferring the audio data from the music material server 12. In the broadcasting receiving apparatus 3, a GUI screen is displayed on the basis of the GUI data from the GUI data server 14, and by an operation to this GUI screen, it becomes possible to display a content of additional information as to music which is distributed, or to have it recorded in a recording medium.

Further, The ground-based station 1, after it added an error correction code to the generated transport stream, applies QPSK (Quadrature Phase Shift Keying) modulation thereto, and transmits it to the communication satellite 2.

On one hand, the broadcasting receiving apparatus 3 has a function as IRD (integrated Receiver Decoder) which receives airwaves from the communication satellite 2, selects a program in a desired channel, and demodulates it, and a function as a recording and reproducing apparatus which records data of program contents selected, and reproduces the recorded data. An output signal of the broadcasting receiving apparatus 3 is supplied to, for example, a television receiver 3a, and by this means, it becomes possible to listen to and view a program of the selected channel, and so on.

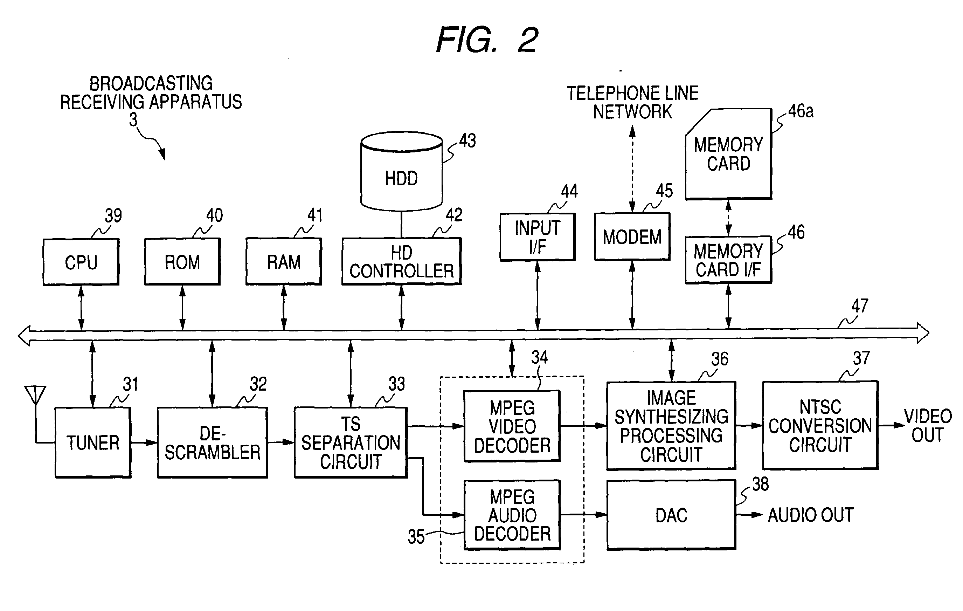

Fig.2 is a block diagram which shows an internal configuration example of the broadcasting receiving apparatus 3.

As shown in Fig. 2, the broadcasting receiving apparatus 3 has a tuner 31, a descrambler 32, a TS separation circuit 33, a MPEG video decoder 34, a MPEG audio decoder 35, an image synthesizing processing circuit 36, a NTSC (National Television Sdandards Committee) conversion circuit 37, a DA converter 38, a CPU (Central Processing Unit) 39, a ROM (Read Only Memory) 40, a RAM (Random Access Memory) 41, a HD controller 42, a HDD 43, an input I/F (Interface) 44, a modem 45, and a memory card I/F 46. The broadcasting receiving apparatus 3 is configured in such a manner that the CPU 39 connects each component in the apparatus through an internal bus 47, and executes general control to these things. IN addition, a memory card 46a is loaded in the memory card I/F 46.

The tuner 31 receives an input of airwaves which were received by an antenna, and then, selects a signal of predetermined carrier frequency in accordance with an instruction from the CPU 39, and applies QPSK demodulation and error correction processing, and outputs a transport stream to the descrambler 32.

The descrambler 32 extracts ECM and EEM from the transport stream from the tuner 31, and supplies it to the CPU 39. In addition, it applies descramble processing by use of key information which was read out from the memory card 46a, to data of broadcasting contents in the transport stream which was judged to be able to be listened to and viewed by control of the CPU 39.

The TS separation circuit 33 separates a packet (TS packet) in which data designated by the CPU 39 was stored, such as moving image data and audio data, from the transport stream to which the descramble processing was applied. Packets, which include moving image data and audio data for a TV channel, are supplied to the MPEG video decoder 34 and the MPEG audio decoder 35, respectively, and packets, which include audio data for a music channel, are supplied to the MPEG audio decoder 35. In addition, in case of recording these data, that packet is supplied through the internal bus 47 to HDD 43 and RAM 41 under the control of CPU 39. In addition, packets, which include additional information and GUI data to audio data in the transport stream, are supplied through the internal bus 47 to CPU 39, and predetermined processing is carried out.

The MPEG video decoder 34 applies decompression and decoding processing to moving image data in the packet which was supplied from the TS separation circuit 33, or supplied through the internal bus 47, in accordance with a MPEG-2 system, and outputs the moving image data after processing, to the image synthesizing processing circuit 36. In addition, the MPEG audio decoder 35 applies decompression and decoding processing to audio data in the packet which was supplied from the TS separation circuit 33, or supplied through the internal bus 47, in accordance with a MPEG-AUDIO-Layer 2 system, and outputs the audio data after processing, to the DA converter 38.

The image synthesizing processing circuit 36 synthesizes data of GUI images which was generated by processing of CPU 39, with the moving image data which was processed by the MPEG video decoder 34, according to need, and outputs it to the NTSC conversion circuit 37. The NTSC conversion circuit 37 converts image data which was generated by the image synthesizing processing circuit 36, into NTSC system analog image signals, and outputs them to the television receiver 3a. The DA converter 38 converts the audio data which was processed by the MPEG audio decoder 35, into analog audio signals, and outputs them to the television receiver 3a.

CPU 39 controls each part in the broadcasting receiving apparatus 3, by executing a program which was stored in ROM 40. In ROM 40, various data, such as OS (Operating System) and BIOS (Basic Input/ Output System) and application programs, has been stored in advance. RAM 41 temporarily stores at least a part of a program which is executed by CPU 39, and various data necessary for processing by this program.

The HD controller 42 controls data writing and reading operations in HDD 43, on the basis of command and address information which is designated by CPU 39. In HDD 43, recorded is various broadcasting contents such as moving image data and audio data, and additional information etc.

The input I/F 44 has a receiving circuit which receives, for example, an infrared signal from a remote controller which is not shown in the figure, an operation switch with which a user carries out a manual operation, and so on, and supplies a control signal which complies with an input operation of a user, to CPU 39. The modem 45 is a communication I/F circuit for carrying out communication in such a state that it is connected to a telephone line.

The memory card I/F 46 is an I/F circuit which controls writing and reading operations to the loaded memory card 46a. The memory card 46a is composed of a non-volatile semiconductor memory, and in this memory card 46a, stored are contract information which was extracted from a broadcasting receiving signal, key information for use in descramble, and so on.

Here, a basic operation in this broadcasting receiving apparatus 3 will be described.

Firstly, CPU 39 outputs a channel selection information on the basis of the control signal from the input I/F 44, to the tuner 31, and in the tuner 31, a receiving signal with carrier frequency which complied with the inputted channel selection information is selected, and demodulated. The demodulated transport stream is supplied to the descrambler 32, and when contract information of the relevant audience is extracted from EEM which was extracted from the transport stream by control of CPU 39, this contract information is written in the memory card 46a. In addition, under control of CPU 39, the contract information which was read out from the memory card 46a, and ECM which was extracted from the transport stream from the tuner 31 are verified, and as to broadcasting contents which can be listened to and viewed, descramble processing is applied in the descrambler 32, by use of the key information for use in descramble, which was read out from the memory card 46a.

In case that a TV channel is selected by a user, a packet including moving image data and audio data of a designated channel is separated by the TS separation circuit 33, from the transport stream to which the descramble processing was applied, and decompression and decoding processing is applied thereto by the MPEG video decoder 34 and the MPEG audio decoder 35, respectively. The moving image data after processing is supplied through the image synthesizing processing circuit 36 to the NTSC conversion circuit 37, and the audio data after processing is supplied to the DA converter 38. By this means, the selected television program is reproduced and outputted on the television receiver 3a.

In addition, in case that picture recording is requested by an operation input of a user, during such a period that a TV channel is being received, the relevant packets of moving image data and audio data, which were separated in the TS separation circuit 33, are recorded sequentially in HDD 43 through the HD controller 42. Further, in case that reproduction of the television program, which was recorded in HDD 43, was requested, the relevant moving image data and audio data are read out from HDD 43, and supplied to the MPEG video decoder 34 and the MPEG audio decoder 35, respectively, and decompression and decoding processing is applied thereto. By this means, the television program, which was recorded, is reproduced on the television receiver 3a.

On one hand, in case that a music channel is selected by a user, a packet including audio data which corresponds to the designated music channel, and a packet including additional information and GUI data which correspond to this channel, are separated from the transport stream to which descramble processing was applied. The packet of audio data is supplied to the MPEG audio decoder 35, and decompression and decoding processing is applied thereto, and audio data after processing is supplied to the DA converter 38. By this means, music, which was distributed, is reproduced and outputted on the television receiver 3a.

In addition, each packet of the additional information and GUI data which were separated in the TS separation circuit 33 is supplied to CPU 39. CPU 39 synthesizes GUI images with output images by the image synthesizing processing circuit 39, on the basis of the GUI data among them, and outputs it to the television receiver 3a through the NTSC conversion circuit 37, to display the GUI images. In accordance with an input of a user to the GUI images, necessary information is extracted from the additional information, and it is synthesizedwith the output images in the image synthesizing processing circuit 36, as for example, character data etc. By this means, a user can display additional information as to music which is distributed, on the television receiver 3a.

Further, in case that audio recording is requested by an operation input of a user, during such a period that a music channel is being received, a packet of audio data, which was separated in the TS separation circuit 33, is recorded sequentially in HDD 43. Together with this, a meta data table, in which a writing position etc. in HDD 43, of head data of music to be recorded were stored, is written in HDD 43, on the basis of time information in the separated additional information.

When reproduction of audio data of the music channel which was recorded in HDD 43 is requested, CPU 3 9 designates a recording position of head data of the designated music, in the HD controller 42, with reference to the above-described meta data table. By this means, audio data of the designated music is read out from HDD 43, and supplied to the MPEG audio decoder 35, and after decompression and decoding processing is applied thereto, it is outputted through the DA converter 38, and reproduced and outputted on the television receiver 3a. In addition, at this time, it is alsopossible to readout additional information of the reproduced music from the meta data table, and to display it on the television receiver 3a.

Meanwhile, it may be also all right even if, in the broadcasting receiving apparatus 3, provided is a communication I/F for communicating with external devices, in addition to this, enabling to transmit packets of desired moving image data and audio data which were separated in the TS separation circuit 33 from the received transport stream, to external devices through the communication I/F, or to receive the moving image data and audio data from external devices through the communication I/F to record them in HDD 43, and to decompress and decode it to output it to the television receiver 3a. In addition, it may be also all right even if it enables to output the decompressed and decoded moving image data and audio data to outside from the communication I/F and a digital output terminal etc., with digital data without modification.

Next, processing on the occasion of recording audio data which was received through a music channel will be described in detail.

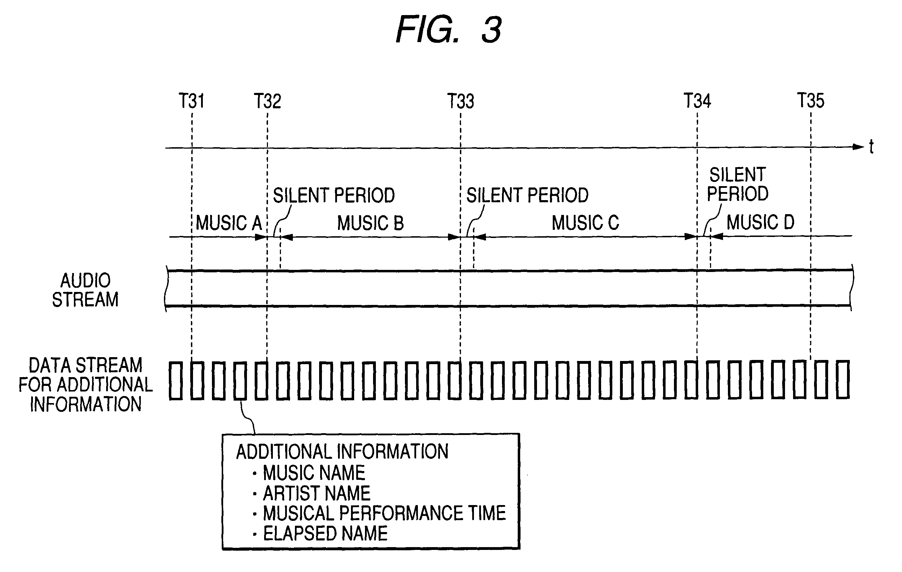

Fig. 3 is a view which schematically shows a configuration of a data stream which is transmitted in a music channel.

As described above, additional information which corresponds to music is transmitted together with audio data of music, in the music channel. As shown in Fig. 3, in an audio stream in which audio data is stored, audio data of each music is continuously stored, sandwiching a silent period of approximately several seconds. In the audio stream, in a practical sense, it is configured in such a manner that, after the audio data was divided into PES (Packetized Elementary Stream) packets based on MPEG-2 system and stored, this PES packet train is further divided into TS packets. In a header of the PES packet, stored are PTS (Presentation Time Stamp) etc. which show reproduction output timing of audio data, and in a header of the TS packet, stored are PCR (Program Clock Reference) for setting a count value of STC (System Time Clock) which gives reproduction time standard in a reproducing apparatus, PID (Packet Identifier) for separating a desired data stream from a transport stream, and so on.

On one hand, additional information is stored in a data stream which is different from the audio stream, as shown in Fig.3, and transferred. The additional information is stored in the TS packet and transferred, in the same manner. In the additional information, described are a name of music, a name of an artist which is performing the music, musical performance time which shows time from performance start of music up to end, elapsed time from performance start of the relevant music as to audio data which is now being transmitted, and so on. The additional information corresponds to music which is being transmitted by an audio stream at that time point, and is transmitted at intervals of certain time which is sufficiently shorter than performance time of one music, coming along with transmission of the audio stream.

In the meantime, since the audio stream is of such a thing that audio data of music is simply transferred continuously, it is not possible to judge a boundary of music, only from the audio stream. However, by referring to the musical performance time and the elapsed time which are stored in the additional information, it becomes possible to judge a boundary of music. For example, at timing T31 for receiving music A in Fig.3, by subtracting elapsed time from musical performance time with reference to additional information which was received at this time, it becomes possible to calculate time until reception of the music A is ended. Reception ending time, which is calculated from this time, can be deemed as reception start time of music B which will be received next.

In the example of Fig.3, when recording of audio stream is started at the timingT31, themusicAis recorded in midstream, and its reception ending time (corresponds to timing T32) is calculated from additional information which corresponds to the music A. When reception of the music A is ended at the timing T32, the music B is received and recorded on and on, and in the same manner, its reception ending time (corresponds to timing T33) is calculated from additional information which corresponds to the music B. Hereinafter, reception/recording of the music C is started at the timing T33 in the same manner, and reception/recording of music D is started at timing T34. In addition, in Fig.3, completion of recording at timing T35, which is halfway of reception of the music D, is instructed.

In the broadcasting receiving apparatus 3 which relates to this embodiment, on the occasion of recording audio data, which was received through a music channel, in HDD 43, a TS packet train including data of an audio stream which was separated in the TS separation circuit 33 is recorded in HDD 43 in a state without change. By this means, processing at the time of recording is simplified, and real-time recording of an audio stream which is being received is realized easily.

In addition, reception timing of a boundary of music is detected from time information in additional information which was received at the same time, and a recording position in HDD 43 as to a head of next music is stored together with additional information in the meta data table, and recorded in HDD 43. It enables to search the recorded audio data with respect to each music, by referring to this meta data table.

Here, an example of a table configuration of the meta data table is shown in a table 1.

**[Table 1]**

| Track Number | 1 | 2 | 3 | 4 |
|---|---|---|---|---|
| Head Position Information | xxxx | xxxx | xxxx | xxxx |
| Music Name | Music A | Music B | Music C | Music D |
| Artist Name | Artist AA | Artist BB | Artist CC | Artist DD |
| Performance Time | 5 Minutes | 3 Minutes | 4 Minutes | 6 Minutes |
| State Flag | 1 (Imperfection) | 0 (Perfection) | 0 (Perfection) | 1 (Imperfection) |

In the table 1, it shows, as an example, a meta data table which is generated in case that recording is started at timing T31 shown in Fig.3 and recording is ended at timing T35. In the meta data table, for example, track numbers are assigned in the order corresponding to the received music, and position number on HDD 43 in which a head of that music was recorded (called as head position information), a name of music from additional information which corresponds to that music, name of an artist, musical performance time are stored with respect to each track number. Among them, the head position information is assumed to be represented by, as an example, a sector number which is a minimum unit of reading, writing in HDD 43.

Further, it is also possible to store a state flag showing whether or not audio data of the recorded music is recorded in HDD from a head to an end of music, in the meta data table. The state flag is represented by for example, of 1 bit data, and takes a value of "0" in case that a head through an end were recorded perfectly, and takes a value of "1" in an imperfect case, i.e., in case that recording is started from halfway of music, and in case that recording is ended in midstream of music.

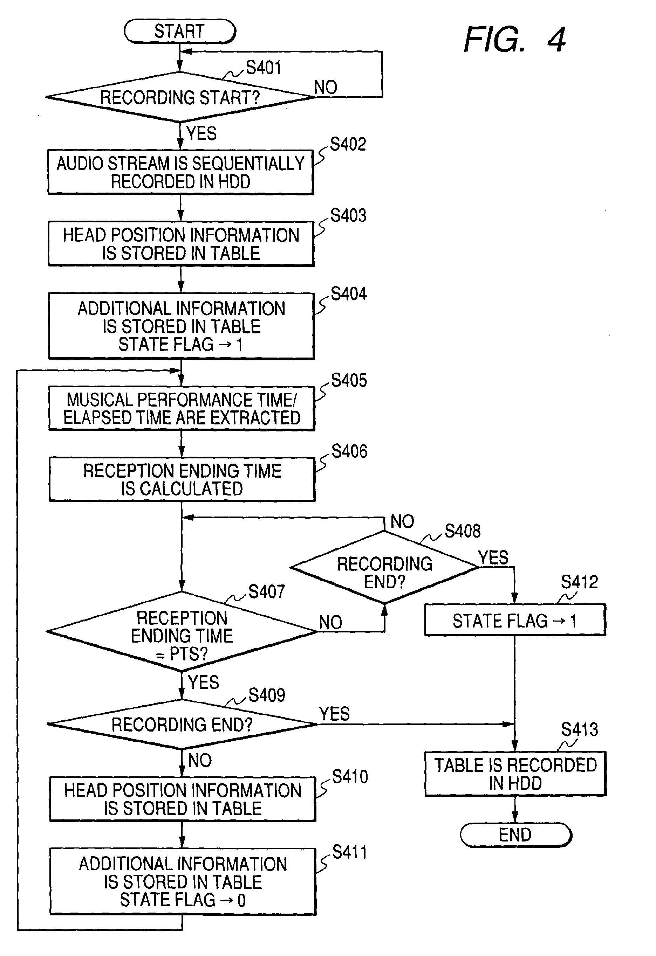

Fig.4 is a flow chart which shows a flow of processing on the occasion of recording data of a music channel in the broadcasting receiving apparatus 3.

When, in such a state that a music channel was selected, start of recording is instructed by for example, an input operation etc. of a user, in a step S401, it goes to a step S402.

In the step S402, TS packets of a corresponding audio stream which was separated in the TS separation circuit 33 are recorded sequentially in HDD 43.

In a step S403, recording position information (corresponds to a sector number) which was instructed in the HD controller 42 at the time of recording start of the audio stream is stored in a meta data table of music which is being received, as head position information. Meanwhile, at this time, the meta data table is temporarily generated, for example, in RAM 41, and stored in HDD 43 after completion of recording.

In a step S404, a music name, an artist name and musical performance time are extracted from additional information which is received, and stored in the meta data table. In addition, at this time, it is judged that recording was started from halfway of music, and it is recordedwitha state flag of "1". Meanwhile, for example, in case that it can be judged whether or not it was recorded from a head of music, by judging accordance/discordance of musical performance time and elapsed time in additional information, it may be all right even if a value of a state flag, which corresponded to that judgment, is recorded.

In a step S405, musical performance time and elapsed time are extracted from additional information.

In a step S406, reception ending time of music which is now being received is calculated from the extracted musical performance time and the elapsed time. Concretely speaking, such a value that the elapsed time was subtracted from the musical performance time is converted to time information with frequency (27MHz) of STC as a standard. In addition, at this time, CPU 39 is counting STC, and a count value of STC is corrected on the basis of PCR which was extracted from an audio stream.

In a step S407, a value of PTS in the audio data stream which is now being received is monitored, and it is judged whether or not it accords with the reception ending time which was calculated in the step S406. Meanwhile, at this time, in a practical sense, a value of PTS is converted to time information with frequency of STC as a standard, to be compared. In case that it does not accord, it goes to a step S408.

In the step S408, it is judged whether or not completion of recording was instructed by an input operation of a user, and in case that it was instructed, it returns to the step S407 to keep on monitoring of PTS, and in case that it was instructed, it proceeds on to a step S412. In case that reception ending time accorded with PTS in the step S407, it proceeds on to a step S409.

In the step S409, it is judged whether or not completion of recording was instructed by for example, an input operation etc. of a user, and in case that it is not instructed, it returns to a step S410, and in case that it was instructed, it proceeds on to a step S413. Therefore, when it proceeded on to the step S410, recording of music which has been received until that moment is to be ended, and recording of next music is to be started.

In the step S410, recording position information for having a next TS packet recorded in HDD 43 is stored in a column of head position information which corresponds to next music in a meta data table.

In a step S411, a music name, an artist name and musical performance time are extracted from additional information of the next music, and stored in the meta data table. In addition, it is recorded with a state flag of "0". After that, it returns to the step S405, and reception ending time of the next music is calculated, and that time and PTS are compared.

In addition, in the step S408, in case that completion of recording was instructed by for example, an input operation etc. of a user, before it reaches to the reception ending time, it is judged that recording was ended in midstream of music, and therefore, in a step S412, a state flag, which corresponds to music now being recorded at this time, in the meta data table is rewritten to "1". Meanwhile, in case that completion of recording was instructed in the step S409, it becomes such timing that reception of music was ended, and therefore, the state flag is "0" without change.

In the step S413, after recording of an audio stream in HDD 43 was completed, the meta data table, which was temporarily recorded in RAM 41, is recorded in HDD 43, to complete processing.

By the above-described processing, while the audio stream is sequentially recorded in HDD 43, a recording position of a head of music in that audio stream is recorded in the meta data table. Therefore, by simple processing, it is possible to record the received audio stream in HDD 43 in real time, and it becomes possible to search the recorded audio stream with respect to each music. In addition, it is possible to record additional information together with a recording position in an associated manner, and therefore, it is possible to output additional information of music which was recorded in HDD 43, as a music list which was displayed as a list, etc.

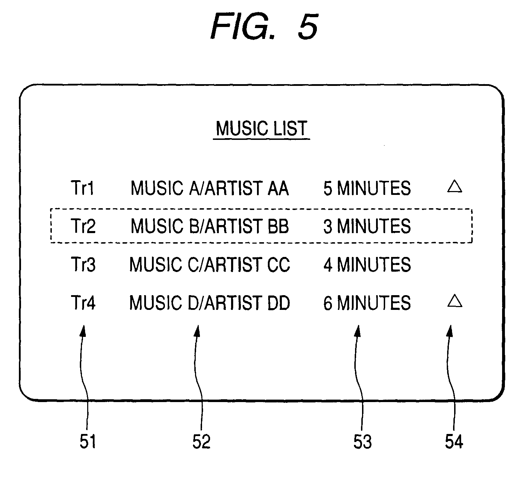

Fig.5 is a view which shows a screen display example of a music list of music which was recorded in HDD 43.

When display of a music list as to the recorded music is requested by an operation input of a user, CPU 39 reads out a meta data table from HDD 43, and prepares screen data of the music list and outputs it to the image synthesizing processing circuit 36. By this means, the music list is displayed on the television receiver 3a.

The music list shown in Fig. 5 is a thing which was generated on the basis of the meta data table shown in the table 1, and is configured by a display part 51 which shows a track number, a display part 52 which shows a music name and an artist name, a display part 53 which shows musical performance time (reproducing time) , and a display part 54 which shows that it is such a state that recording is not perfect, and by this means, information as to each music which was recorded in HDD 43 is displayed as a list. In this regard, however, in the display part 53, regardless of whether or not that music is recorded inaperfect state, musicalperformance time, whichwasdescribed in corresponding additional information, is displayed without change.

Here, in the above-described display part 54, display is carried out in accordance with a state flag which was recorded in the meta data table. In an example of Fig. 5, a predetermined mark is displayed only in case that the relevant music is recorded in an imperfect state. In the broadcasting receiving apparatus 3, as described above, audio data itself on HDD 43 is not recorded by a music unit, and is recorded with a state of an audio stream without change, and therefore, as to first music and last music during a period of 1 time recording, large is such a possibility that entirety of that music can not be recorded perfectly. Therefore, by notifying a user of a recording state of audio data of music by displaying it in the display part 54, on the basis of the state flag, it is possible to heighten convenience of a user.

Meanwhile, in the above-described processing example of Fig.4, even in case that recording was started from halfway of music, audio data of that music is recorded in HDD 43 as it is, but it may be also all right even if recording as to this music is not carried out, and a recording operation is started from reception ending time of that music. In addition, in case that recording completion was instructed in midstream of recording of music, it may be also all right even if writing of an audio stream in HDD 43 is kept on compulsorily until reception ending time of that music. By the suchlike processing, it is possible to record audio data of every music in a perfect state.

In addition, it is also possible to select arbitrary music from the music list as shown in Fig.5, and to reproduce and output it. For example, in such a state that the music list was displayed, arbitrary music is selected by use of a direction key of a remote controller, and a reproduction button is depressed, and thereby, a signal for instructing reproduction of the designated music is outputted to CPU 39.

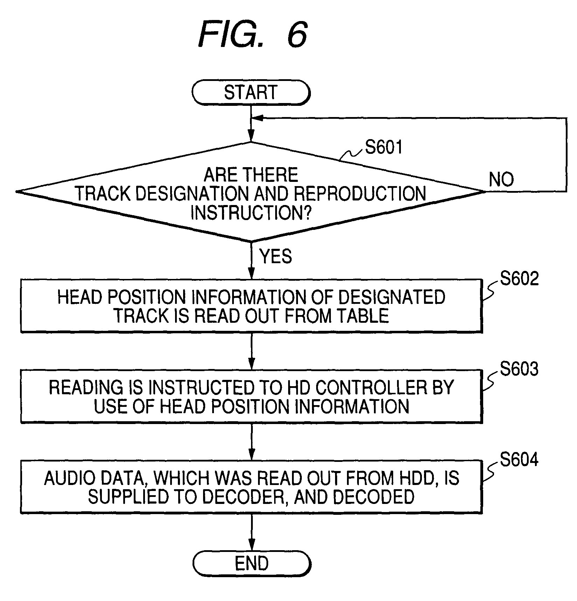

Fig.6 is a flow chart which shows a basic flow of processing for reproducing music which was recorded in HDD 43.

In a step S601, in case that an instruction of designation and reproduction of a track was carried out by an operation input of a user, etc., it proceeds on to a step S602.

In the step S602, head position information, which corresponds to the designated track, is read out with reference to the meta data table.

In a step S603, by use of the head position information which was read out, reading of information from HDD 43 is instructed to the HD controller 42.

In a step S604, audio data, which was read out from HDD 43, is sequentially supplied to the MPEG audio decoder 35, to have decompression and decoding processing executed. By this means, the designated music is reproduced and outputted on the television receiver 3a.

In addition, by referring to the meta data table, it is also possible to automatically reproduce music, which was recorded in HDD 43, in an arbitrary order.

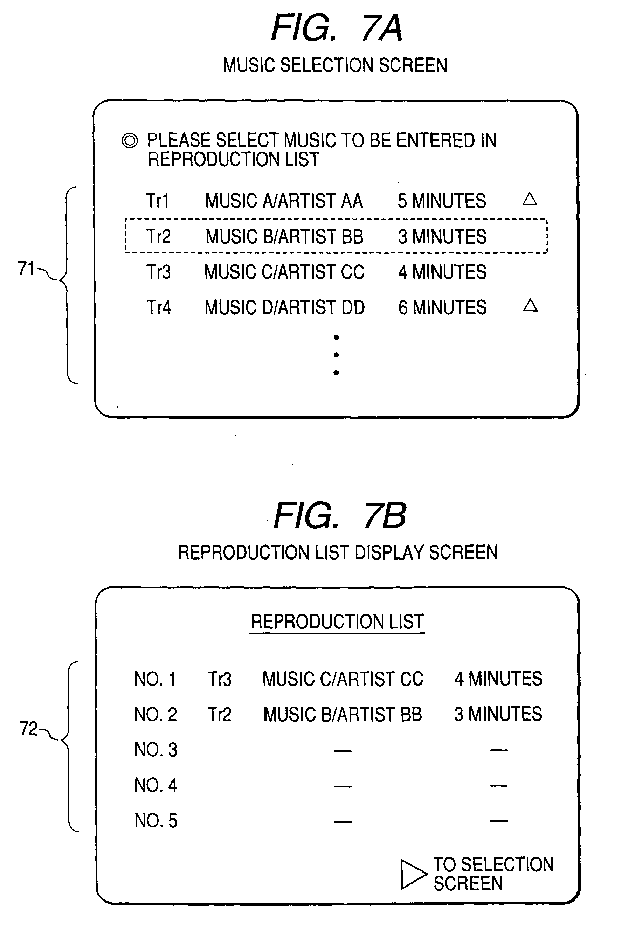

Fig. 7A and 7B are views which show a screen display example for automatic reproduction of the recorded music.

In Fig. 7A, shown is a music selection screen for selecting music which will be reproduced automatically out of the recorded music. In this music selection screen, in a display part 71, displayed is a music list which shows a list of the recorded music and additional information. In this display part 71, in the same manner as in the music list shown in Fig.5, it is possible for a user to confirm whether or not each music is recorded in a perfect state. For example, arbitrary music is selectedbyadirectionkeyof a remote controller, andadecision key is depressed, and thereby, it is shifted to a reproduction list display screen shown in Fig.7B, and the selected music is added to the reproduction list.

In the reproduction list display screen of Fig.7B, in a display part 72, displayed is a reproduction list which displays the selected music in the order of reproduction. In the reproduction list, it may be also all right even if an artist name and track number, musical performance time etc. are displayed in addition to the selected music name. In addition, for example, a designated direction key on the remote controller is depressed from this screen, and thereby, it returns to the music selection screen of Fig.7A, and it is possible to further add music to the reproduction list. For example, a reproduction key of the remote controller is depressed from such a state that the reproduction list display screen was displayed, and thereby, music is automatically reproduced in the order displayed in the reproduction list.

As described above, by referring to the meta data table, it is possible to carry out the same reproduction operation as in case that audio data was recorded in HDD 43 as a data file with a music unit. In addition, in the meta data table, recording position information and additional information are managed in an integrated fashion, and therefore, it is possible to carry out data reading of music and additional information at high speed.

Meanwhile, in the above-described embodiment, it was described as to such a case that the invention was applied to a service for distributing audio data and its additional information through satellite digital broadcasting, but it is also possible to apply it to another system digital broadcasting.

In addition, it is also possible to apply the invention to a service in which moving image data or still image data is distributed together with audio data of music. Further, it is also possible to apply the invention to a service for distributing moving image contents such as, a movie and sport live coverage, in addition to music. In the suchlike case, a moving image stream and an audio stream, which were received, are recorded sequentially in a recording medium without change, and a recording position of a head is detected with respect to each program such as a movie and sport live coverage in these streams, and is recorded in the meta data table together with additional information.

Further, in the above-described embodiment, additional information of music was distributed as a data stream which is different from the audio stream, but for example, it may be also all right even if additional information is inserted in a header etc. in the audio stream.

In addition, as a recording medium on which the received audio stream etc. are recorded, it may be also all right even if applied is a portable type recording medium such as an optical disk medium such as DVD, and a memory card which used a semiconductor memory, in addition, to HDD. In this regard, however, in case of recording a data stream such as audio and moving images and a meta data table on the suchlike portable type recording medium, and reproducing the data stream in an apparatus which is different from the above-described broadcasting receiving apparatus, for example, there is a necessity to load a dedicated application program for reproducing data of audio and moving images out of the data stream with respect to each program such as music, on the basis of the meta data table, in that apparatus.

Embodiments provide an information recording and reproducing apparatus which is capable of recording audio data received, in a searchable state with respect to each music, with simple processing, in a recording medium in real time. The information recording and reproducing apparatus receives a data stream including, together with an audio stream, additional information of music which is now being transmitted by that audio stream. In the additional information, recorded is time information such as musical performance time of music and elapsed time. The information recording and reproducing apparatus records the received audio stream, sequentially in HDD, without change, and on the basis of the received additional information, reception ending time of music which is now being received in the audio stream, is calculated, and at such a time point that it became the calculated reception ending time, recording position information, which shows a recording position in HDD, of data of music which is now being received, is recorded in HDD, in association with additional information of the relevant music as a head position of music which will be received next.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. An information recording and reproducing apparatus which receives a data stream including data of contents, and additional information of a program which includes time information with respect to each program in the data of contents which is now being transmitted, and records it in the recording medium, and reproduces the recorded contents,
the information recording and reproducing apparatus comprising:
a time calculation unit adapted to calculate reception ending time of the program which is currently received in the data of contents, on the basis of the additional information received; and
a recording control unit adapted to have the data of contents received recorded sequentially in the recording medium, and to have recording position information which shows a recording position in the recording medium of the data of contents which is now being received, recorded in the recording medium, at such a time point that it became the reception ending time which was calculated by the time calculation unit, in association with the additional information of the program as a head position of the program which will be received next.

2. The information recording and reproducing apparatus as set forth in claim 1, wherein
the additional information includes performance time and elapsed time of the program as the time information, and
the time calculation unit calculates the reception ending time on the basis of the performance time and the elapsed time.

3. The information recording and reproducing apparatus as set forth in claim 1, wherein
the recording control unit records in the recording medium, information which shows that recording is imperfect in case that the program which is now being received is such a thing that recording to the recording medium was started from its halfway, and in case that recording to the recording medium was ended in its halfway, on the basis of the reception ending time calculated by the time calculation unit, in association with the additional information of the program.

4. The information recording and reproducing apparatus as set forth in claim 1, further comprising an input unit adapted to output a signal for instructing recording start and recording end to the recording medium, of data of the contents which is now being received, in accordance with an input operation from a user, and
wherein the recording control unit starts recording to the recording medium, of data of the contents, from the reception ending time of the program, in case that it was judged that data of the contents in midstream of the program is now being received, on the basis of the reception ending time which was calculated by the time calculation unit, when it received a signal for instructing recording start from the input unit.

5. The information recording and reproducing apparatus as set forth in claim 1, wherein the recording medium is a hard disk drive, and the recording position information is information which points out a sector in the hard disk drive.

6. The information recording and reproducing apparatus as set forth in claim 1, further comprising:
a program designating unit adapted to designate the program which was recorded in the recording medium, in response to an input operation from a user;
a reading control unit adapted to read out from the recording medium, the recording position information which was associated with the additional information which corresponds to the program designated by the program designating unit, and to read out data of the contents from a recording position on the recording medium which is pointed out by the read out recording position information; and
reproduction processing unit adapted to output a reproduction signal, on the basis of data of the contents which was read out from the recording medium by the reading control unit.

7. The information recording and reproducing apparatus as set forth in claim 6, further comprising
a display control unit adapted to output a display signal for screen display, and
wherein the reading control unit reads out from the recording medium, the additional information which corresponds to the program designated by the program designating unit, together with the corresponding recording position information and data of the contents, and
the display control unit outputs the display signal for displaying a content of the additional information read out by the reading control unit, on a screen.

8. The information recording and reproducing apparatus as set forth in claim 6, wherein
the program designating unit designates a reproduction order of the program which was recorded in the recording medium, in response to an input operation from a user, and
the reading control unit reads out sequentially data of the contents from a recording position on the recording medium which is pointed by the recording position information which corresponds to the designated program, in accordance with the reproduction order designated by the program designating unit.

9. The information recording and reproducing apparatus as set forth in claim 1, wherein the data of contents includes at least audio data, and the program indicates music.

10. An information recording method for receiving a data stream including data of contents, and additional information of a program which includes time information with respect to each program in the data of contents which is now being transmitted, and recording it in a recording medium,
the information recording and reproducing apparatus comprising:
a time calculation unit calculates reception ending time of the programwhich is nowbeing received in the data of contents, on the basis of the additional information which was received by a receiving unit; and
a recording control unit records the data of contents, which was received by the receiving unit, sequentially in the recording medium, and records recording position information which shows a recording position in the recording medium, of the data of contents which is now being received, at such a time point that it became the reception ending time which was calculated by the time calculation unit, in association with the additional information of the program as a head position of the program which will be received next.
